# EUROPEAN PATENT SPECIFICATION

(11) **EP 1 623 405 B1**
(45) Date of publication and mention of the grant of the patent: **29.07.2015**
(21) Application number: 04760671.0
(22) Date of filing: 30.04.2004
(51) Int. Cl.: G02F 1/167

(54) **ELECTROPHORETIC DISPLAYS**
ELEKTROPHORETISCHE ANZEIGEN
ECRANS ELECTROPHORETIQUES

(30) Priority: 02.05.2003 US 320158 P; 06.05.2003 US 320169 P
(43) Date of publication of application: 08.02.2006
(73) Proprietor: E Ink Corporation, Cambridge, MA 02138-1002 (US)
(72) Inventor: WILCOX, Russell, J., Natick, Massachusetts 01760 (US); CAO, Lan, Arlington, Massachusetts 02474 (US); DANNER, Guy, M., Somerville, Massachusetts 02143 (US); PAOLINI, Richard, J., Framingham, MA 01702 (US)
(74) Representative: Cole, David John
(86) International application number: PCT/US2004/013573
(87) International publication number: WO 2004/099862

(56) References cited:
- WO-A2-02/065215
- US-A- 5 567 355
- US-A- 6 067 185
- US-A- 6 130 774
- US-A1- 2002 044 333
- US-A1- 2002 180 687
- DALISA A L ED - PANKOVE J I: "ELECTROPHORETIC DISPLAYS" DISPLAY DEVICES, TOPICS IN APPLIED PHYSICS, BERLIN, SPRINGER VERLAG, DE, vol. VOL. 40, 1980, pages 213-232, XP002065449

## Description

This invention relates to electrophoretic displays containing controlled amounts of pigment.

Particle-based electrophoretic displays have been the subject of intense research and development for a number of years. In this type of display, a plurality of charged particles move through a suspending fluid under the influence of an electric field. Electrophoretic displays can have attributes of good brightness and contrast, wide viewing angles, state bistability, and low power consumption when compared with liquid crystal displays. (The terms "bistable" and "bistability" are used herein in their conventional meaning in the art to refer to displays comprising display elements having first and second display states differing in at least one optical property, and such that after any given element has been driven, by means of an addressing pulse of finite duration, to assume either its first or second display state, after the addressing pulse has terminated, that state will persist for at least several times, for example at least four times, the minimum duration of the addressing pulse required to change the state of the display element.) Nevertheless, problems with the long-term image quality of these displays have prevented their widespread usage. For example, particles that make up electrophoretic displays tend to settle, resulting in inadequate service-life for these displays.

Numerous patents and applications assigned to or in the names of the Massachusetts Institute of Technology (MIT) and E Ink Corporation have recently been published describing encapsulated electrophoretic media. Such encapsulated media comprise numerous small capsules, each of which itself comprises an internal phase containing electrophoretically-mobile particles suspended in a liquid suspending medium, and a capsule wall surrounding the internal phase. Typically, the capsules are themselves held within a polymeric binder to form a coherent layer positioned between two electrodes. Encapsulated media of this type are described, for example, in U.S. Patents Nos. 5,930,026; 5,961,804; 6,017,584; 6,067,185; 6,118,426; 6,120,588; 6,120,839; 6,124,851; 6,130,773; 6,130,774; 6,172,798; 6,177,921; 6,232,950; 6,249,721; 6,252,564; 6,262,706; 6,262,833; 6,300,932; 6,312,304; 6,312,971; 6,323,989; 6,327,072; 6,376,828; 6,377,387; 6,392,785; 6,392,786; 6,413,790; 6,422,687; 6,445,374; 6,445,489; 6,459,418; 6,473,072; 6,480,182; 6,498,114; 6,504,524; 6,506,438; 6,512,354; 6,515,649; 6,518,949; 6,521,489; 6,531,997; 6,535,197; 6,538,801; 6,545,291; 6,580,545; 6,639,578; 6,652,075; 6,657,772; 6,664,944; 6,680,725; 6,683,333; 6,704,133; 6,710,540; 6,721,083; 6,724,519; and 6,727,881; and U.S. Patent Applications Publication Nos. 2002/0019081; 2002/0021270; 2002/0060321; 2002/0063661; 2002/0090980; 2002/0113770; 2002/0130832; 2002/0131147; 2002/0171910; 2002/0180687; 2002/0180688; 2002/0185378; 2003/0011560; 2003/0011868; 2003/0020844; 2003/0025855; 2003/0038755; 2003/0053189; 2003/0102858; 2003/0132908; 2003/0137521; 2003/0137717; 2003/0151702; 2003/0214695; 2003/0214697; 2003/0222315; 2004/0008398; 2004/0012839; 2004/0014265; and 2004/0027327; and International Applications Publication Nos. WO 99/67678; WO 00/05704; WO 00/26761; WO00/36560; WO 00/38000; WO 00/38001; WO 00/67110; WO 00/67327; WO 01/07961; WO 01/08241; WO 03/107,315; WO 04/017135; WO 04/023195; and WO 04/023202.

Many of the aforementioned patents and applications recognize that the walls surrounding the discrete microcapsules in an encapsulated electrophoretic medium could be replaced by a continuous phase, thus producing a so-called "polymer-dispersed electrophoretic display" in which the electrophoretic medium comprises a plurality of discrete droplets of an electrophoretic fluid and a continuous phase of a polymeric material, and that the discrete droplets of electrophoretic fluid within such a polymer-dispersed electrophoretic display may be regarded as capsules or microcapsules even though no discrete capsule membrane is associated with each individual droplet; see for example, the aforementioned 2002/0131147. Accordingly, for purposes of the present application, such polymer-dispersed electrophoretic media are regarded as subspecies of encapsulated electrophoretic media.

An encapsulated electrophoretic display typically does not suffer from the clustering and settling failure mode of traditional electrophoretic devices and provides further advantages, such as the ability to print or coat the display on a wide variety of flexible and rigid substrates. (Use of the word "printing" is intended to include all forms of printing and coating, including, but without limitation: pre-metered coatings such as patch die coating, slot or extrusion coating, slide or cascade coating, curtain coating; roll coating such as knife over roll coating, forward and reverse roll coating; gravure coating; dip coating; spray coating; meniscus coating; spin coating; brush coating; air knife coating; silk screen printing processes; electrostatic printing processes; thermal printing processes; ink jet printing processes; and other similar techniques.) Thus, the resulting display can be flexible. Further, because the display medium can be printed (using a variety of methods), the display itself can be made inexpensively.

A related type of electrophoretic display is a so-called "microcell electrophoretic display", sometimes also called a "microcup electrophoretic display". In a microcell electrophoretic display, the charged particles and the suspending fluid are not encapsulated within capsules but instead are retained within a plurality of cavities formed within a carrier medium, typically a polymeric film. See, for example, International Application Publication No. WO 02/01281, and U.S. Patent Application Publication No. 2002/0075556, both assigned to Sipix Imaging, Inc.

Hereinafter, the term "microcavity electrophoretic display" will be used to cover both encapsulated and microcell electrophoretic displays.

Known microcavity electrophoretic displays can be divided into two main types, referred to hereinafter for convenience as "single particle" and "dual particle" respectively. A single particle medium has only a single type of electrophoretic particle suspended in a colored medium, at least one optical characteristic of which differs from that of the particles. (In referring to a single type of particle, we do not imply that all particles of the type are absolutely identical. For example, provided that all particles of the type possess substantially the same optical characteristic and a charge of the same polarity, considerable variation in parameters such as particle size and electrophoretic mobility can be tolerated without affecting the utility of the medium.) The optical characteristic is typically color visible to the human eye, but may, alternatively or in addition, be any one or more of reflectivity, retroreflectivity, luminescence, fluorescence, phosphorescence, or color in the broader sense of meaning a difference in absorption or reflectance at non-visible wavelengths. When such a medium is placed between a pair of electrodes, at least one of which is transparent, depending upon the relative potentials of the two electrodes, the medium can display the optical characteristic of the particles (when the particles are adjacent the electrode closer to the observer, hereinafter called the "front" electrode) or the optical characteristic of the suspending medium (when the particles are adjacent the electrode remote from the observer, hereinafter called the "rear" electrode, so that the particles are hidden by the colored suspending medium).

A dual particle medium has two different types of particles differing in at least one optical characteristic and a suspending fluid which may be uncolored or colored, but which is typically uncolored. The two types of particles differ in electrophoretic mobility; this difference in mobility may be in polarity (this type may hereinafter be referred to as an "opposite charge dual particle" medium) and/or magnitude. When such a dual particle medium is placed between the aforementioned pair of electrodes, depending upon the relative potentials of the two electrodes, the medium can display the optical characteristic of either set of particles, although the exact manner in which this is achieved differs depending upon whether the difference in mobility is in polarity or only in magnitude. For ease of illustration, consider an electrophoretic medium in which one type of particles are black and the other type white. If the two types of particles differ in polarity (if, for example, the black particles are positively charged and the white particles negatively charged), the particles will be attracted to the two different electrodes, so that if, for example, the front electrode is negative relative to the rear electrode, the black particles will be attracted to the front electrode and the white particles to the rear electrode, so that the medium will appear black to the observer. Conversely, if the front electrode is positive relative to the rear electrode, the white particles will be attracted to the front electrode and the black particles to the rear electrode, so that the medium will appear white to the observer.

If the two types of particles have charges of the same polarity, but differ in electrophoretic mobility (this type of medium may hereinafter to referred to as a "same polarity dual particle" medium), both types of particles will be attracted to the same electrode, but one type will reach the electrode before the other, so that the type facing the observer differs depending upon the electrode to which the particles are attracted. For example suppose the previous illustration is modified so that both the black and white particles are positively charged, but the black particles have the higher electrophoretic mobility. If now the front electrode is negative relative to the rear electrode, both the black and white particles will be attracted to the front electrode, but the black particles, because of their higher mobility, will reach it first, so that a layer of black particles will coat the front electrode and the medium will appear black to the observer. Conversely, if the front electrode is positive relative to the rear electrode, both the black and white particles will be attracted to the rear electrode, but the black particles, because of their higher mobility will reach it first, so that a layer of black particles will coat the rear electrode, leaving a layer of white particles remote from the rear electrode and facing the observer, so that the medium will appear white to the observer: note that this type of dual particle medium requires that the suspending fluid to sufficiently transparent to allow the layer of white particles remote from the rear electrode to be readily visible to the observer. Typically, the suspending fluid in such a display is not colored at all, but some color may be incorporated for the purpose of correcting any undesirable tint in the white particles seen therethrough.

Certain of the aforementioned E Ink and MIT patents and applications describe electrophoretic media which have more than two types of electrophoretic particles within a single capsule. For present purposes, such multi-particle media are regarded as a sub-class of dual particle media.

Both single and dual particle electrophoretic displays may be capable of intermediate gray states having optical characteristics intermediate the two extreme optical states already described.

Microcavity electrophoretic displays may have microcavities of any suitable shape; for example, several of the aforementioned E Ink and MIT patents and applications (see especially U.S. Patents Nos. 6,067,185 and 6,392,785) describe encapsulated electrophoretic displays in which originally-spherical capsules are flattened so that they have substantially the form of oblate ellipsoids. When a large number of such oblate ellipsoidal capsules are deposited upon a substrate, the walls of the capsules may contact one another, until the capsules approach a close-packed condition in which the walls of adjacent capsules are flattened against one another so that the capsules assume substantially the form of polygonal prisms. In theory, in a close-packed layer of capsules, the individual capsules would have the form of hexagonal prisms, and indeed micrographs of some encapsulated electrophoretic media show a close approach to this condition. However, more typically the individual capsules have substantially the form of irregular polygonal prisms. In polymer-dispersed encapsulated electrophoretic media, there are of course no individual capsules, but the droplets of internal phase may assume forms similar to the capsule forms already discussed.

Thus, microcavities in microcavity electrophoretic displays may be irregular. The following discussion will consider microcavities in a laminar film having substantial dimensions in a plane considered as having X and Y axes, and a much smaller dimension perpendicular to this plane, this dimension being denoted the Z axis. The average internal height of the microcavity along the Z axis will be denoted the "internal phase height" or "IP height" of the microcavity. The average area parallel to the XY plane of the microcavity (averaged along the Z axis) excluding capsule or cavity walls will be denoted the "IP area", while the corresponding average area including the capsule or cavity walls will be denoted the "capsule area". The maximum diameter parallel to the XY plane of the microcavity at any height excluding capsule or cavity walls will be denoted the "IP diameter", while the corresponding average diameter including the capsule or cavity walls will be denoted the "capsule diameter".

It has long been known that, to optimize the optical performance of electrophoretic and other electro-optic displays, it is desirable to maximize the active fraction of the display area, i.e., the fraction of the display area which can change optical state when an electric field is applied to the electro-optic medium. Inactive areas of the display, such as the black masks often used in liquid crystal displays, and the area occupied by capsule or microcavity walls in microcavity electrophoretic displays, do not change optical state when an electric field is applied, and hence reduce the contrast between the extreme optical states of the display. However, there is relatively little consideration in the published literature relating to other parameters affecting the optical performance of electrophoretic displays, and in particular the amount of pigment needed in the electrophoretic medium. This may be due, in part, to the fact that most electrophoretic displays discussed in the literature have been single particle electrophoretic displays, and in such displays the limiting factor on the thickness of the electrophoretic medium is normally the optical density of the dye in the suspending fluid, and not the amount of pigment present. This is not the case with dual particle electrophoretic displays, and may not be the case with single particle displays using dyes with optical densities higher than those used in most prior art electrophoretic displays.

It has now been found that the optical performance of electrophoretic displays is substantially affected by variations in the amount of pigment present in the electrophoretic medium, the IP height of the medium, and the pigment loading of the internal phase (i.e., the proportion of the volume of the internal phase which is comprised of pigment), and this invention relates to electrophoretic media and displays in which the relationships among these various parameters are controlled so as to improve, and desirably to optimize, the optical performance of the media and displays.

Accordingly, this invention provides an electrophoretic medium having walls defining at least one microcavity containing an internal phase, this internal phase comprising a plurality of at least one type of electrophoretic particle suspended in a suspending fluid and capable of moving therethrough upon application of an electric field to the electrophoretic medium, the average internal height of the at least one microcavity differing by not more than 5µm from the saturated particle thickness of the electrophoretic particle divided by the volume fraction of the electrophoretic particles in the internal phase.

The term "saturated particle thickness" of electrophoretic particles in a microcavity is used herein to denote the thickness of the layer of particles which would be formed over the IP area of the microcavity using an internal phase containing just sufficient electrophoretic particles that, if application of a specific electric field to the medium for a time T suffices to switch the electrophoretic medium between its extreme optical states, variations in the time of application of this specific electric field within the range of 0.95 to 1.05 T will not change the optical properties of either extreme state of the electrophoretic medium by more than 2 units of L*, where L* has the usual CIE definition. This saturated particle thickness is calculated without regard to packing factors; in other words, the saturated particle thickness is the hypothetical thickness of the layer which would be formed over the IP area if the electrophoretic particles formed a completely solid layer, without voids, over this area. For example, if an electrophoretic medium has an IP height of 50 µm and contains 10 per cent by volume of electrophoretic particles, its saturated particle thickness is 5 µm. As will readily be apparent to those familiar with the packing of multi-particle layers, this thickness does *not* correspond to the actual thickness of the layer of particles formed when all the particles are driven to one end surface of the microcavity, since inevitably this particle layer will contain a substantial volume fraction of voids. For the sake of simplicity, suppose the electrophoretic medium comprises spherical particles of essentially uniform diameter which form an essentially close-packed layer. Since the packing fraction for close-packed uniform spheres is approximately 0.64, the actual thickness of the layer formed on one end surface of the microcavity will be about 5/0.64 or 7.8 µm.

In preferred forms of the present invention, variations in the time of application of this specific electric field within the range of 0.9 to 1.1 T will not change the optical properties of either extreme state of the electrophoretic medium by more than 2 units of L*, and in especially preferred forms of the invention variations in the time of application of this specific electric field within the range of 0.8 to 1.2 T will not change the optical properties of either extreme state of the electrophoretic medium by more than 2 units of L*.

The saturated particle thickness is typically between about 1 and about 5 µm, and desirably between about 1.5 and about 2.5 µm. The volume fraction of electrophoretic particles in the internal phase (i.e., the fraction of the volume of the internal phase occupied by the electrophoretic particles) is typically from 3 to 40 per cent, and desirably in the range to 6 to 18 per cent.

The electrophoretic medium of the present invention may be of any of the types described above. Thus, the electrophoretic medium may be a single particle medium comprising a single type of electrophoretic particle in a colored suspending fluid. Alternatively, the electrophoretic medium may be a dual particle medium comprising a first type of electrophoretic particle having a first optical characteristic and a first electrophoretic mobility and a second type of electrophoretic particle having a second optical characteristic different from the first optical characteristic and a second electrophoretic mobility different from the first electrophoretic mobility. In such a dual particle medium, the suspending fluid may be uncolored. The electrophoretic medium may be of the microcell type, in which the microcavities have the form of a plurality of cavities formed within a carrier medium. Alternatively, the electrophoretic medium may be an encapsulated electrophoretic medium, in which the microcavities are formed within a plurality of capsules.

One type of display in which the present invention may be especially useful is the so-called "shutter mode" microcavity display. A shutter mode microcavity display is a microcavity display having one "opaque" optical state in which the display (or any given pixel thereof) displays the color or other optical characteristic of an electrophoretic particle, and a second optical state in the which the electrophoretic medium or pixel thereof is light-transmissive. Such a shutter mode display may be of the single or dual particle type, and may have more than the two specified optical states; for example, a dual particle shutter mode display using black and white electrophoretic particles, may have a black opaque state, a white opaque state and a light-transmissive state. The light-transmissive state of a shutter mode display is typically produced by confining the electrophoretic particles in a minor proportion of the cross-sectional area of each microcavity so that light is free to pass through the major proportion of this cross-sectional area. The confinement of the electrophoretic particles to the minor proportion of the cross-sectional area may be effected by using a shaped microcavity (see, for example, the aforementioned U.S. Patents Nos. 6,130,774 and 6,172,798), by placement of electrodes in specific positions relative to the microcavity (see, for example, the aforementioned 2002/0180688 and Japanese Published Patent Applications Nos. 2002-174828 and 2001-356374), or by dielectrophoretic driving of the electrophoretic particles (see, for example, U.S. Patent No. 7,259,744).

Although the second optical state of a shutter mode display has been referred to above as "light-transmissive", a shutter mode display may incorporate a colored or uncolored reflector adjacent the microcavity medium and on the opposed side thereof from that normally by an observer (this opposed surface hereinafter for convenience being referred to as the "rear surface" of the microcavity medium) so that (as described for example in the aforementioned copending Application Serial No. 10/687,166) the light-transmissive optical state of the display actually displays the color (if any) of the reflector. In particular, an advantageous form of color microcavity display may be formed by providing a backplane having a plurality of pixel electrodes, forming a color filter or reflector on the backplane, and then forming a layer of a shutter mode microcavity medium over the color filter or reflector. A microcell medium might be formed by photolithographic techniques, by forming a layer of photoresist over the color filter, and exposing and developing in the conventional manner to form cells walls separating a plurality of microcells. Alternatively, a layer, typically a polymer layer, might be provided over the color filter and microcavities formed mechanically therein, or a preformed layer containing microcavities provided over the color filter. In either case, the microcavities formed can be filled with an electrophoretic mixture (electrophoretic particles plus suspending fluid) and sealed.

Regardless of the exact method used for its manufacture and the exact type of electrophoretic medium employed, this type of color shutter mode display has the advantages that positioning the color filter with respect to the pixel electrodes is simplified, since the pixel electrodes are readily visible during formation or attachment of the filter, and, more importantly, that the positioning of the color filter adjacent the pixel electrodes avoids visible artifacts which may occur due to parallax when a color filter substantially separated from a backplane (for example, a color filter on the opposed side of the electrophoretic medium from the backplane) is viewed off-axis.

One problem with such shutter mode microcavity displays is ensuring good contrast ratio, since even in the light-transmissive optical state of such a shutter mode display, the minor proportion of each microcavity occupied by the electrophoretic particles still displays the color of those particles (or a mixture of the relevant colors, in the case of a dual particle display), and this continuing display of the color of the electrophoretic particles reduces the contrast ratio. The present invention enables one to control the amount of electrophoretic particles needed in a microcavity display, thus minimizing the proportion of each microcavity occupied by the electrophoretic particles in the light-transmissive state of the display and maximizing the contrast ratio, while still providing sufficient electrophoretic particles to ensure good optical properties in the first optical state of the display.

A preferred white electrophoretic particle for use in the present electrophoretic media comprises titania (TiO₂). If the electrophoretic medium is of the dual particle type, it may further comprise dark colored particles formed from carbon black or copper chromite, the dark colored particles formed from carbon black or copper chromite and having an electrophoretic mobility different from the electrophoretic mobility of the titania particles.

Useful embodiments of the present invention may have an internal height of the microcavities between 10 and 30 µm and a volume fraction of electrophoretic particles of between 3 and 15 per cent. Preferred embodiments have an internal height of the microcavities between 12 and 25 µm and a volume fraction of electrophoretic particles of between 5 and 12 per cent. The viscosity of the internal phase is typically less than 5 mPa sec, and typically greater than 1 mPa sec.

This invention extends to an electrophoretic display comprising an electrophoretic medium of the present invention and at least one electrode disposed adjacent the electrophoretic medium and arranged to apply an electric field thereto. Typically, such an electrophoretic display will have a rear electrode structure having a plurality of electrodes arranged to apply an electric field to the electrophoretic medium.

As already indicated, it has been found that, in microcavity electrophoretic displays, there is an optimum internal height of microcavity related to two key variables, namely the saturated particle thickness of the electrophoretic particles, i.e., the minimum thickness of each pigment to achieve an adequate optical state, and the volume fraction of that pigment in the internal phase of the display.

At first glance, it might appear that achieving an "adequate optical state" in an electrophoretic display is solely a function of the desired optical property of the pigments used for any given application. However, it has been found that if an electrophoretic medium does not contain sufficient pigment, the optical properties of the medium may be adversely affected; for example, if an electrophoretic medium contains insufficient white pigment, the reflectivity of the white state of the medium may be lower than the same state of a similar medium containing more white pigment.

For various technical reasons, it is generally desirable to keep an electrophoretic medium as thin as possible consistent with good optical properties. Since the rate at which electrophoretic particles move is determined by electric field strength, and since (all other factors being equal) the electric field strength in an electrophoretic display is proportional to the voltage applied between the electrodes divided by the distance between these electrodes, it is generally desirable to keep this distance to a minimum (i.e., to keep the electrophoretic medium as thin as possible) in order to keep the operating voltage as low as possible, a low operating voltage being desirable to reduce energy consumption by the display (especially in portable, battery-driven devices) and to minimize the cost and complexity of electronic circuitry needed to drive the display. Also, keeping the electrophoretic medium as thin as possible reduces the distance which the electrophoretic particles need to travel during switching of the display between its extreme optical states and thus, at a constant electric field, increases the switching speed of the display. Also, in certain applications, electrophoretic displays are attractive because they can be made flexible, and it is easier to produce a flexible display with a thin electrophoretic medium. Hence, it might at first glance appear that an electrophoretic display should have a minimum IP height and a high volume fraction of pigment in the internal phase so as to provide sufficient pigment to ensure an optimum optical state when that pigment is visible.

However, there are some countervailing considerations. Increased pigment loading will typically result in higher viscosity of the internal phase, and this higher viscosity reduces electrophoretic particle velocity and slows the switching speed of the display for a given applied electric field.

Thus, the optimum formulation of an electrophoretic medium for any particular combination of pigment(s), suspending fluid, operating voltage and desired switching time is a complicated matter. The situation is further complicated by the complex relationships between applied voltages and optical states in electrophoretic media. As discussed in the aforementioned 2003/0137521 and several other of the aforementioned E Ink and MIT patents and applications, electrophoretic media do not act as simple voltage transducers (as do liquid crystals) but rather act, to a first approximation, as impulse transducers, so that the final state of a pixel depends not only upon the electric field applied but also upon the state of the pixel prior to the application of the electric field. This type of behavior can cause serious complications when it is desired to produce an area of supposedly uniform color on a display. Consider, for example, a black and white display intended for use in reading black text, with or without illustrations, on a white background. When such a display is re-written (i.e., when a new page is displayed), unless both the electrophoretic medium formulation and the drive scheme employed are carefully chosen, there may be small variations among the optical states of the numerous pixels in the supposedly uniform white background, and the human eye is very sensitive to such small variations in optical states in a supposedly uniform area, especially since readers are accustomed to a highly uniform white background on a printed page.

In accordance with the present invention it has been found that, to secure good optical performance from a microcavity electrophoretic medium, it is important to correlate the average height of the microcavities with the saturated particle thickness (as defined above) and the volume fraction of the electrophoretic particles in the internal phase of the electrophoretic medium. It has been found that there is an optimum IP height for microcavity electrophoretic media. If the saturation thickness of a pigment is T and the volume fraction of the pigment in the internal phase is F, the optimum IP height is T/F, and in practice it is desirable that the actual IP height not differ from this optimum value by more than about 5 µm. When an electrophoretic medium contains two or more pigments, the value of T/F should be calculated separately for each pigment, and the optimum IP height set to the largest of the resultant values.

It will readily be apparent that, in an electrophoretic medium containing more than one type of electrophoretic particle, each type of particle will have its own saturated particle thickness. Single particle electrophoretic media typically comprise a white pigment in a dyed suspending fluid, while dual particle electrophoretic media typically comprise white and black particles in an uncolored suspending fluid. However, in both cases, the critical saturated particle thickness is usually that of the white particles, since the white particles scatter light while the black particles absorb it, and the pigment thickness needed to scatter light is greater than that required to absorb light.

It has been found that, if the microcavities in an electrophoretic medium have an IP height significantly greater than this optimum T/F value, display performance is reduced. One reason is that the distance that the pigment must travel in order to reach the microcavity wall is greater. A second reason is that for a given voltage field across the internal phase, the field strength is reduced. A low field strength reduces particle velocity. Furthermore, in a multi-pigment system in which particles of opposite charge may have a tendency to aggregate, a low field strength reduces the number of aggregates that are separated. On the other hand, if the microcavities have an IP height significantly less than this optimum value, the desired optical state may not be achieved due to insufficient optical density of pigment.

To evaluate various electrophoretic media, one can measure the total pigment "saturation thickness", achieved from a pulse length time and electric field level across an internal phase, under which a change in the pulse period would change the optical properties of the pigment by no more than a desired threshold amount for visual artifacts. In a typical system with a typical white/black switching speed around 300 ms, at a saturated thickness a pulse length change of 50 ms at 15V would change the optical properties by less than 2 L*. In systems employing faster switching electrophoretic media, a saturated thickness may be adequate if the optical properties would change by less than 2 L* for pulse length variation about 5-20% of the typical white/black switch speed of the medium. As already mentioned, for purposes of clear definition, the term "saturated particle thickness" of electrophoretic particles in a microcavity is used herein to denote the thickness (assuming 100 per cent packing) of the layer of particles which would be formed over the IP area of the microcavity using an internal phase containing just sufficient electrophoretic particles that, if application of a specific electric field to the medium for a time T suffices to switch the electrophoretic medium between its extreme optical states, variations in the time of application of this specific electric field within the range of 0.95 to 1.05 T (i.e., variations in time of ± 5 per cent) will not change the optical properties of either extreme state of the electrophoretic medium by more than 2 units of L*. Desirably, the system should withstand variations in time of ± 10 per cent, and preferably ± 20 per cent, without changes in optical properties exceeding 2 L*.

A preferred white pigment for use in electrophoretic media is titania. The titania desirably has a surface coating of silica and/or alumina, and is also desirably polymer coated, as described in the aforementioned 2002/0185378 or in the related copending U.S. Application Serial No. 60/481,572, filed October 28, 2003. As is known in the art of pigments and paints, the titania particles should desirable be between 0.1 µm and 0.5 µm in diameter, and ideally between 0.2 µm and 0.4 µm in diameter, for greatest efficiency in scattering with minimal thickness. However a composite particle may also be used that contains multiple pigment particles. Titania particles, especially those described in the aforementioned 2002/0185378 and 60/481,572, can have saturated particle thicknesses in the range of from about 1 to 10 µm, and desirably from about 1 to about 5 µm, depending somewhat upon the addressing waveform used. The present inventors have found that, in one preferred titania/carbon black dual particle electrophoretic medium of the present invention, using a preferred addressing pulse of 15 V and a pulse length of between 200 and 500 ms, the titania provided adequate coverage levels at thicknesses between 1.5 and 2.5 µm. In another preferred electrophoretic medium having a lower viscosity, faster switching internal phase driven by 15 V pulses with a pulse length of 100 ms, the titania also provided adequate coverage at thicknesses between 1.5 and 2.5 µm.

Copper chromite particles may be used in place of carbon black particles as the dark colored particles in dual particles media of the present invention (or, indeed, in single particle media where a dark particle is desired). The preparation and use of copper chromite particles in electrophoretic media is fully described in copending U.S. Application Serial No. 10/708,142, filed February 11, 2004.

As discussed above, at first glance it appears desirable to formulate thin electrophoretic media with high pigment loadings, but the ability to do so is limited by the increase in viscosity associated with high pigment loadings. Some increase in pigment loading may be advantageous, as compared with pigment loadings used in prior art electrophoretic displays. For example, to achieve whiter systems, it can be moderately useful to increase titania loading to higher levels such as 5-7 µm thickness. Also, whereas some electrophoretic suspensions known in the art have employed a pigment loading of less than 2 per cent by weight, it has been found that an internal phase comprising up to 45 per cent by weight or 15 per cent by volume of titania particles can have a viscosity that permits the particles to achieve an adequate velocity under electric fields of a strength useful in commercial devices, so as to enable the devices to use driving voltages typically 15 V or less. Preferred media of the present invention may typically have a titania loading of 5 to 15 per cent by volume with an internal phase viscosity between 1 and 6 mPa sec. Given a saturated particle thickness of 1.5 to 2.5 µm, and a titania loading of 10 per cent by volume, it has been found that visual artifacts are reduced when the IP height for a microcavity is between 15 µm and 25 µm, with the optimum value being substantially 20 µm.

Other types of internal phases may permit reduced viscosity, thus permitting a higher pigment loading. For example, an internal phase using a gaseous suspending fluid (see, for example, copending Application Serial No. 10/605,039, filed September 3, 2003, and the corresponding International Application, the aforementioned WO 2004/023202) would be able to support a much higher pigment loading and correspondingly a lower IP height. Such gas-based phases could function with particle loadings as high as 90 per cent by volume.

It is believed (although the invention is in no way limited by this belief) that one of the reasons for the improved optical states achieved by the present invention is that if, in a microcavity electrophoretic display, the pigment is not sufficiently thick, the display is vulnerable to image ghosting. The reasons for such image ghosting may include small voltage variations in the addressing system, slowly-decaying remnant voltages or polarization in the microcavities of the display, settling of the pigments over time, improper mixing of various pigments, and differences between the RC time constant of the internal phase and its external environment, including any binder present. All of these effects can cause variations in the amount of pigment visible to an observer, superimposed on the variations intended to be caused by the addressing of the display.

The "visual artifact level" of a display (typically a high resolution display) may be measured by any suitable means. In one method, many pixels are each subjected to a different switching history typical of the intended usage model. The greatest optical difference between any two pixels is the "maximum visual artifact level." Alternatively, a single pixel may be subjected to many different switching histories and a consistent test addressing pulse then applied. The greatest optical difference between the resulting optical states is another way to measure the "maximum visual artifact level."

To achieve consistent image quality with minimal visual artifacts, it is desirable that the electrophoretic medium contain a minimum adequate thickness of the pigment such that a small variation in pigment level has a minimal optical effect. For portable high-resolution display applications, this optical effect should ideally be no more than 1 to 2 L* units, given typical variations in actual pigment packing thicknesses.

The following Example is now given, though by way of illustration only, to show details of preferred materials, conditions and techniques used in the present invention.

### Example

An internal phase was prepared comprising 10 per cent by volume white particles and 1 percent by volume black particles (carbon black) by volume in a hydrocarbon suspending fluid; the internal phase had a viscosity of 4.75 mPa sec. The white particles comprised titania and had an average size of approximately 0.6 µm and a saturation particle thickness estimated at 1.5 to 2.5 µm. The internal phase was encapsulated in gelatin/acacia microcapsules substantially as described in Paragraphs [0069] to [0074] of the aforementioned 2002/0180687. The resultant microcapsules were separated into three batches differing in wet capsule diameter size distributions. Each batch was mixed into a slurry with a polymeric binder, coated to form an electrophoretic film, and laminated to a back electrode to form a switchable display pixel, substantially as described in Paragraphs [0075] and [0076] of the aforementioned 2002/0180687. During the coating process, suitable equipment settings such as speed, pressure and die height were used to achieve a range of wet film coat weights, which then dried into capsules of differing IP heights in part due to the effects of binder evaporation and surface tension. In one batch, the dry capsules were roughly spherical; in the second batch the dry capsules had substantially the form of oblate spheroids; and in the third batch the dry capsules had substantially the form of prolate spheroids, with heights greater than their diameters. In each case the spheroids ranged from circular in XY projection to hexagonal, varying with the packing density in the film of electrophoretic medium.

The three resultant electrophoretic media differed in estimated IP heights and typical pixel optical properties when switched with a 350 ms 15 V pulse, as shown in the Table below.

**Table**

| Estimated IP Height in Microcavity (µm) | White State L* | Dark State L* | Contrast Ratio | Maximum Visual Artifacts L* |
|---|---|---|---|---|
| 18 | 62 | 21 | 9.4:1 | 1.5 |
| 44 | 59 | 27 | 5.3:1 | 3.7 |
| 55 | 60 | 24 | 6.9:1 | 5.5 |

Assuming a saturation particle thickness for the titania of 2 µm, the optimum IP height according to the present invention should be 20 µm; the IP height calculated for the black pigment is substantially less, so that it is the optimum IP height for the titania which is important for this medium. It will be seen from the data in the Table above that the capsules having an estimated IP height of 18 µm, close to the calculated 20 µm, had substantially better optical properties, including an improved contrast ratio, as compared with the other two media having substantially greater IP heights.

## Claims

1. An electrophoretic medium having walls defining at least one microcavity having an internal phase area and containing an internal phase, this internal phase comprising a plurality of at least one type of electrophoretic particle suspended in a suspending fluid and capable of moving therethrough upon application of an electric field to the electrophoretic medium, the medium being **characterized in that** the average internal height of the at least one microcavity differs by not more than 5µm from the "saturated particle thickness" of the electrophoretic particle divided by the volume fraction of the electrophoretic particles in the internal phase,
where the "saturated particle thickness" denotes the thickness of the layer of particles which would be formed over the internal phase area of the microcavity using an internal phase containing just sufficient electrophoretic particles that, if application of a specific electric field to the medium for a time T suffices to switch the electrophoretic medium between its extreme optical states, variations in the time of application of this specific electric field within the range of 0.95 to 1.05 T will not change the optical properties of either extreme state of the electrophoretic medium by more than 2 units of L*, where L* has the CIE definition..

2. An electrophoretic medium according to claim 1 wherein the saturated particle thickness is between 1 and 5 µm.

3. An electrophoretic medium according to claim 2 wherein the saturated particle thickness is between 1.5 and 2.5 µm.

4. An electrophoretic medium according to claim 1 such that, if application of a specific electric field to the medium for time T suffices to switch the medium between its extreme optical states, variations in the time of application of this specific electric field within the range of 0.9 to 1.1 T will not change the optical properties of either extreme state of the electrophoretic medium by more than 2 units of L*.

5. An electrophoretic medium according to claim 4 such that variations in the time of application of this specific electric field within the range of 0.8 to 1.2 T will not change the optical properties of either extreme state of the electrophoretic medium by more than 2 units of L*.

6. A electrophoretic medium according to claim 1 comprising a single type of electrophoretic particle in a colored suspending fluid.

7. A electrophoretic medium according to claim 1 comprising a first type of electrophoretic particle having a first optical characteristic and a first electrophoretic mobility and a second type of electrophoretic particle having a second optical characteristic different from the first optical characteristic and a second electrophoretic mobility different from the first electrophoretic mobility.

8. A electrophoretic medium according to claim 7 wherein the suspending fluid is uncolored.

9. A electrophoretic medium according to claim 1 wherein the at least one microcavity has the form of a plurality of cavities formed within a carrier medium.

10. A electrophoretic medium according to claim 1 wherein the at least one microcavity is formed within a plurality of capsules.

11. An electrophoretic medium according to claim 1 wherein the electrophoretic particles comprise titania.

12. An electrophoretic medium according to claim 11 wherein the electrophoretic particles further comprise dark colored particles formed from carbon black or copper chromite, the dark colored particles formed from carbon black or copper chromite and having an electrophoretic mobility different from the electrophoretic mobility of the titania particles.

13. An electrophoretic medium according to claim 1 wherein the volume fraction of electrophoretic particles in the internal phase is from 3 to 40 per cent.

14. An electrophoretic medium according to claim 13 wherein the volume fraction of electrophoretic particles in the internal phase is from 6 to 18 per cent.

15. An electrophoretic medium according to claim 1 having an internal height of the at least one microcavity between 10 and 30 µm and a volume fraction of electrophoretic particles of between 3 and 15 per cent.

16. An electrophoretic medium according to claim 15 having an internal height of the at least one microcavity between 12 and 25 µm and a volume fraction of electrophoretic particles of between 5 and 12 per cent.

17. An electrophoretic medium according to claim 1 wherein the viscosity of the internal phase is less than 5 mPa sec.

18. An electrophoretic medium according to claim 17 wherein the viscosity of the internal phase is greater than 1 mPa sec.

19. An electrophoretic display comprising an electrophoretic medium according to claim 1 and at least one electrode disposed adjacent the electrophoretic medium and arranged to apply an electric field thereto.

20. An electrophoretic display according to claim 19 having a first optical state in which the display displays an optical characteristic of the one type of electrophoretic particle and a second optical state in which the electrophoretic medium is light-transmissive.

21. An electrophoretic display according to claim 20 wherein, in the light-transmissive optical state, the electrophoretic particles are confined in a minor proportion of the cross-sectional area of each microcavity.

22. An electrophoretic display according to claim 20 comprising a backplane comprising a plurality of pixel electrodes, and a color filter or reflector, the color filter or reflector being disposed between the backplane and the electrophoretic medium.

## Patentansprüche

1. Elektrophoretisches Medium, das Wände aufweist, die mindestens einen Mikrohohlraum definieren, der einen inneren Phasenbereich aufweist, und eine innere Phase beinhalten, wobei diese innere Phase mehrere von mindestens einer Art von elektrophoretischem Partikel aufweist, der in einer Suspensionsflüssigkeit suspendiert ist und fähig ist, bei Anlegen eines elektrischen Feldes am elektrophoretischen Medium sich dort hindurchzubewegen, wobei das Medium **dadurch gekennzeichnet ist, dass** die durchschnittliche Innenhöhe des mindestens einen Mikrohohlraums um nicht mehr als 5 µm von der "gesättigten Teilchendicke" des elektrophoretischen Partikels geteilt durch den Volumenanteil der elektrophoretischen Partikel in der inneren Phase abweicht,
wobei die "gesättigte Teilchendicke" die Dicke der Schicht von Partikeln bezeichnet, die über dem inneren Phasenbereich des Mikrohohlwaums unter Verwendung einer inneren Phase gebildet werden würde, die gerade genügend elektrophoretische Partikel enthält, dass, wenn das Anlegen eines spezifischen elektrischen Feldes an das Medium für eine Zeit T ausreicht, um das elektrophoretische Medium zwischen seinen extremen optischen Zuständen umzuschalten, Abweichungen in der Zeit des Anlegens dieses spezifischen elektrischen Feldes im Bereich von 0,95 bis 1,05 T nicht die optischen Eigenschaften jedes extremen Zustandes des elektrophoretischen Mediums um mehr als 2 Einheiten L* ändern, wobei L* die Cit-definition aufweist.

2. Elektrophoretisches Medium nach Anspruch 1, wobei die gesättigte Teilchendicke zwischen 1 und 5 µm beträgt.

3. Elektrophoretisches Medium nach Anspruch 2, wobei die gesättigte Teilchendicke zwischen 1,5 und 2,5 µm beträgt.

4. Elektrophoretisches Medium nach Anspruch 1, wobei, wenn das Anlegen eines spezifischen elektrischen Feldes an das Medium für die Zeit T ausreicht, um das Medium zwischen seinen extremen optischen Zuständen umzuschalten, Abweichungen in der Zeit des Anlegens dieses spezifischen elektrischen Feldes im Bereich von 0,9 bis 1,1 T nicht die optischen Eigenschaften jedes extremen Zustandes des elektrophoretischen Mediums um mehr als 2 Einheiten von L* ändert.

5. Elektrophoretisches Medium nach Anspruch 4, wobei Abweichungen in der Zeit des Anlegens dieses spezifischen elektrischen Feldes im Bereich von 0,8 bis 1,2 T nicht die optischen Eigenschaften jedes extremen Zustandes des elektrophoretischen Mediums um mehr als 2 Einheiten von L* ändern.

6. Elektrophoretisches Medium nach Anspruch 1, aufweisend eine einzelne Art von elektrophoretischem Partikel in einer farbigen Suspensionsflüssigkeit.

7. Elektrophoretisches Medium nach Anspruch 1, aufweisend eine erste Art von elektrophoretischem Partikel, die eine erste optische Eigenschaft und eine erste elektrophoretische Mobilität aufweist, und eine zweite Art von elektrophoretischem Partikel, die eine zweite optische Eigenschaft aufweist, die sich von der ersten optischen Eigenschaft unterscheidet, und eine zweite elektrophoretische Mobilität, die sich von der ersten elektrophoretischen Mobilität unterscheidet.

8. Elektrophoretisches Medium nach Anspruch 7, wobei die Suspensionsflüssigkeit ungefärbt ist.

9. Elektrophoretisches Medium nach Anspruch 1, wobei der mindestens eine Mikrohohlraum die Form von mehreren innerhalb eines Trägermedium gebildeten Hohlräume aufweist.

10. Elektrophoretisches Medium nach Anspruch 1, wobei der mindestens eine Mikrohohlraum innerhalb von mehreren Kapseln gebildet ist.

11. Elektrophoretisches Medium nach Anspruch 1, wobei die elektrophoretischen Partikel Titandioxid aufweisen.

12. Elektrophoretisches Medium nach Anspruch 11, wobei die elektrophoretischen Partikel weiter dunkel gefärbte Partikel aufweisen, die aus Kohlenstoffschwarz oder Kupferchromit gebildet sind, und die dunkel gefärbten Partikel, die aus Kohlenstoffschwarz oder Kupferchromit gebildet sind, eine elektrophoretische Mobilität aufweisen, die sich von der elektrophoretischen Mobilität der Titandioxidpartikel unterscheidet.

13. Elektrophoretisches Medium nach Anspruch 1, wobei der Volumenanteil von elektrophoretischen Partikeln in der inneren Phase von 3 bis 40 Prozent beträgt.

14. Elektrophoretisches Medium nach Anspruch 13, wobei der Volumenanteil von elektrophoretischen Partikeln in der inneren Phase von 6 bis 18 Prozent beträgt.

15. Elektrophoretisches Medium nach Anspruch 1, das eine Innenhöhe von dem mindestens einen Mikrohohlraum zwischen 10 und 30 µm und einen Volumenanteil von elektrophoretischen Partikeln zwischen 3 und 15 Prozent aufweist.

16. Elektrophoretisches Medium nach Anspruch 15, das eine Innenhöhe von dem mindestens einen Mikrohohlraum zwischen 12 und 25 µm und einen Volumenanteil von elektrophoretischen Partikeln zwischen 5 und 12 Prozent aufweist.

17. Elektrophoretisches Medium nach Anspruch 1, wobei die Viskosität der inneren Phase kleiner als 5 mPa sek ist.

18. Elektrophoretisches Medium nach Anspruch 17, wobei die Viskosität der inneren Phase größer als 1 mPa sek ist.

19. Elektrophoretisches Display, aufweisend ein elektrophoretisches Medium nach Anspruch 1 und mindestens eine Elektrode, die angrenzend an das elektrophoretische Medium angeordnet und eingerichtet ist, um ein elektrisches Feld daran anzulegen.

20. Elektrophoretisches Display nach Anspruch 19, das einen ersten optischen Zustand aufweist, in dem das Display eine optische Eigenschaft der einen Art von elektrophoretischem Partikel anzeigt und einen zweiten optischen Zustand, in dem das elektrophoretische Medium lichtdurchlässig ist.

21. Elektrophoretisches Display nach Anspruch 20, wobei, im lichtdurchlässigen optischen Zustand, die elektrophoretischen Partikel auf einen geringeren Anteil an Querschnittsfläche jedes Mikrohohlraums beschränkt sind.

22. Elektrophoretisches Display nach Anspruch 20, aufweisend eine Backplane, die mehrere Pixelelektroden und einen Farbfilter oder Reflektor aufweist, wobei der Farbfilter oder Reflektor zwischen der Backplane und dem elektrophoretischen Medium angeordnet ist.

## Revendications

1. Milieu électrophorétique ayant des parois définissant au moins une microcavité ayant une surface de phase interne et contenant une phase interne, cette phase interne comprenant une pluralité d'au moins un type de particule électrophorétique en suspension dans un fluide de suspension et susceptible de se déplacer à travers celle-ci lors de l'application d'un champ électrique au milieu électrophorétique, le milieu étant **caractérisé en ce que** la hauteur interne moyenne de l'au moins une microcavité ne diffère pas de plus de 5 µm de « l'épaisseur saturée en particules » de la particule électrophorétique divisée par la fraction volumique des particules électrophorétiques dans la phase interne,
« l'épaisseur saturée en particules » représentant l'épaisseur de la couche de particules qui serait formée sur la surface de phase interne de la microcavité en utilisant une phase interne contenant juste assez de particules électrophorétiques pour que, si l'application d'un champ électrique spécifique au milieu pendant un temps T suffit à faire basculer le milieu électrophoré tique entre ses états optiques extrémes, les variations du temps d'application de ce champ électrique spécifique dans la gamme de 0,95 à 1,05 T ne modifient pas les propriétés optiques de l'un ou l'autre état extrême du milieu électrophorétique de plus de 2 unités de L*, L* ayant la définition CIE.

2. Milieu électrophorétique selon la revendication 1 dans lequel l'épaisseur saturée en particules se situe entre 1 et 5 µm.

3. Milieu électrophorétique selon la revendication 2 dans lequel l'épaisseur saturée en particules se situe entre 1,5 et 2,5 µm.

4. Milieu électrophorétique selon la revendication 1 tel que, si l'application d'un champ électrique spécifique au milieu pendant un temps T suffit à faire basculer le milieu électrophorétique entre ses états optiques extrêmes, les variations du temps d'application de ce champ électrique spécifique dans la gamme de 0,9 à 1,1 T ne modifieront pas les propriétés optiques de l'un ou l'autre état extrême du milieu électrophorétique de plus de 2 unités de L*.

5. Milieu électrophorétique selon la revendication 4 tel que les variations du temps d'application de ce champ électrique spécifique dans la gamme de 0,8 à 1,2 T ne modifieront pas les propriétés optiques de l'un ou l'autre état extrême du milieu électrophorétique de plus de 2 unités de L*.

6. Milieu électrophorétique selon la revendication 1 comprenant un seul type de particule électrophorétique dans un fluide de suspension coloré.

7. Milieu électrophorétique selon la revendication 1 comprenant un premier type de particule électrophorétique ayant une première caractéristique optique et une première mobilité électrophorétique et un deuxième type de particule électrophorétique ayant une deuxième caractéristique optique différente de la première caractéristique optique et une deuxième mobilité électrophorétique différente de la première mobilité électrophorétique.

8. Milieu électrophorétique selon la revendication 7 dans lequel le fluide de suspension n'est pas coloré.

9. Milieu électrophorétique selon la revendication 1 dans lequel l'au moins une microcavité a la forme d'une pluralité de cavités formées à l'intérieur d'un milieu de support.

10. Milieu électrophorétique selon la revendication 1 dans lequel l'au moins une microcavité est formée à l'intérieur d'une pluralité de capsules.

11. Milieu électrophorétique selon la revendication 1 dans lequel les particules électrophorétiques comprennent du dioxyde de titane.

12. Milieu électrophorétique selon la revendication 11 dans lequel les particules électrophorétiques comprennent en outre des particules de couleur sombre formées à partir de noir de carbone ou de chromite de cuivre, les particules de couleur sombre formées à partir de noir de carbone ou de chromite de cuivre ayant une mobilité électrophorétique différente de la mobilité électrophorétique des particules de dioxyde de titane.

13. Milieu électrophorétique selon la revendication 1 dans lequel la fraction volumique de particules électrophorétiques dans la phase interne est de 3 à 40 pour cent.

14. Milieu électrophorétique selon la revendication 13 dans lequel la fraction volumique de particules électrophorétiques dans la phase interne est de 6 à 18 pour cent.

15. Milieu électrophorétique selon la revendication 1 ayant une hauteur interne de l'au moins une microcavité entre 10 et 30 µm et une fraction volumique de particules électrophorétiques entre 3 et 15 pour cent.

16. Milieu électrophorétique selon la revendication 15 ayant une hauteur interne de l'au moins une microcavité entre 12 et 25 µm et une fraction volumique de particules électrophorétiques entre 5 et 12 pour cent.

17. Milieu électrophorétique selon la revendication 1 dans lequel la viscosité de la phase interne est inférieure à 5 mPa.s.

18. Milieu électrophorétique selon la revendication 17 dans lequel la viscosité de la phase interne est supérieure à 1 mPa.s.

19. Écran électrophorétique comprenant un milieu électrophorétique selon la revendication 1 et au moins une électrode disposée à côté du milieu électrophorétique et configurée pour y appliquer un champ électrique.

20. Écran électrophorétique selon la revendication 19 ayant un premier état optique dans lequel l'écran affiche une caractéristique optique du type de particule électrophorétique et un deuxième état optique dans lequel le milieu électrophorétique transmet la lumière.

21. Écran électrophorétique selon la revendication 20 dans lequel, dans l'état optique transmettant la lumière, les particules électrophorétiques sont confinées dans une proportion mineure de la section transversale de chaque microcavité.

22. Écran électrophorétique selon la revendication 20 comprenant un fond de panier comprenant une pluralité d'électrodes de pixel, et un filtre coloré ou un réflecteur, le filtre coloré ou le réflecteur étant disposé entre le fond de panier et le milieu élcctrophorétique.
